# EUROPEAN PATENT APPLICATION

(11) **EP 4 483 985 A1**
(43) Date of publication of application: **01.01.2025**
(21) Application number: 24182210.5
(22) Date of filing: 14.06.2024
(51) Int. Cl.: B01D 35/30, B01D 35/143, B01D 27/02

(54) **FILTER DEVICE AND REFRIGERATOR INCLUDING THE SAME**

(30) Priority: 20.06.2023 KR 20230078637
(71) Applicant: LG Electronics Inc., Yeongdeungpo-gu Seoul 07336 (KR)
(72) Inventor: SHIN, Jihong, 08592 Seoul (KR); SIM, Hyehyun, 08592 Seoul (KR)
(74) Representative: Vossius & Partner Patentanwälte Rechtsanwälte mbB

(57) **Abstract**

Disclosed are a filter device and a refrigerator, in which a switch, which detects whether a filter is installed, is turned on or off interlocking with rotation of a head cover, so that an operation for detecting whether the filter is completely installed and an operation for detecting a replacement completion signal of the filter can be synchronized with each other.

## Description

### BACKGROUND

### [Technical Field]

The disclosure relates to a refrigerator, and more particularly to a refrigerator including a filter device.

### [Background Art]

The refrigerator refers to a home appliance in which cold air generated using the circulation of a refrigerant is supplied to a storage compartment to keep various types of storage objects fresh for a long period of time in the storage compartment.

The refrigerator may include an ice making device that makes ice based on the cold air, and the ice making device may make and store a certain amount of ice in advance.

The refrigerator may receive raw water from a raw water source and supply water to the ice making device to make ice.

The refrigerator may include a filter device that filters off impurities or contaminants contained in the raw water to supply clean water.

In the filter device, a filter is required to be replaced periodically, and thus detachably provided for efficient and convenient management and convenience so that a user can replace the filter in person.

After the filter is newly replaced, some water may irregularly flow or murky water may come out. Therefore, the refrigerator enters an auto flushing mode for flowing water for a certain period of time to maintain the best quality of water.

Through the auto flushing mode, foreign substances in air or water remaining in the filter are removed as discharged to the outside.

The auto flushing mode may start in response to a specific signal.

For example, a user may detach a cover from the filter device to replace the filter, and attach the cover to the filter device after replacing the filter.

The refrigerator may use a switch for detecting whether the cover is attached to or detached from the filter device, thereby detecting a point in time when the cover is completely assembled, and starting the auto flushing mode.

However, when such a switch's detection of whether the cover is attached to or detached from the filter device is used as a signal for starting the auto flushing mode, the following problems may arise.

For example, when an unskilled user replaces the filter in person, s/he may attach the cover to the filter device in the state that the filter is not completely assembled.

If the cover is attached to the filter device even though the filter is not completely assembled, water may leak due to imperfect sealing in an incompletely assembled area of the filter because the auto flushing mode automatically starts.

In addition, if a user removes the existing filter and attaches only the cover to the filter device without installing a new filter, the auto flushing mode automatically starts in the state that the filter is not installed.

### [Disclosure]

### [Technical Problem]

An aspect of the disclosure is to provide a filter device and a refrigerator, in which a mechanism for detecting a filter replacement completion signal is simplified.

An aspect of the disclosure is to provide a filter device and a refrigerator, in which supply of water is prevented from proceeding in a misassembled state.

An aspect of the disclosure is to provide a filter device and a refrigerator, in which a filter replacement completion signal and an auto flushing start signal are detected based on the same operation.

An aspect of the disclosure is to provide a filter device and a refrigerator, in which supply of water is prevented from proceeding in a state that a filter is removed.

### [Technical Solution]

According to an embodiment of the disclosure, a filter device and a refrigerator may include: a casing unit configured to accommodate a filter therein; a filter bracket, to which the filter is installed and secured, including a head cover operating to rotate with respect to a certain axis and restrict movement of the filter; and a switch configured to detect whether the filter is installed, and becomes turned on or off interlocking with the rotation of the head cover.

While the switch is turned on, an auto flushing mode may start to supply raw water to the filter and discharge the raw water passed through the filter to an outside.

When the filter is not completely installed to the filter bracket, the switch may be turned off as the head cover is spaced apart at a predetermined distance from the switch or the switch pushes the head cover in an opposite direction to the rotation of the head cover.

The filter bracket and the filter may be secured to a first lateral side of the casing unit, the switch may be placed on a second lateral side of the casing unit, and a structure, which rotates along with the head cover and pushes the switch to turn on the switch when the filter is completely installed to the filter bracket, may be connected to a first side of the head cover.

The filter bracket, the filter, and the switch may be secured to the first lateral side of the casing unit, and a structure, which is pushed by the head cover to turn on the switch when the filter is completely installed to the filter bracket, may be placed between the head cover and the filter.

A connector, which interlocks with the structure and pushes the switch when the structure is pushed, may be placed between the structure and the switch.

The filter bracket, the filter, and the switch may be secured to the first lateral side of the casing unit, and a structure, which is pushed by the head cover to turn on the switch upon the filter being completely installed to the filter bracket, may be placed between the head cover and the switch.

The filter bracket, the filter, and the switch may be secured to the first lateral side of the casing unit, a structure, which is pushed by the filter upon the filter being completely installed to the filter bracket, may be placed on the first lateral side of the casing unit, and the switch is turned on as being pushed upon the structure being pushed.

The filter device may further include: a drain valve configured to move the purified water from the filter to a drain; and a branch pipe configured to move the purified water from the filter to the ice making device and/or the drain valve, wherein, when the switch is turned on, the drain valve is turned on to start an auto flushing mode that supplies the raw water to the filter and discharges the raw water passed through the filter to an outside via the drain valve.

After the auto flushing mode, an ice maker water supplying mode may start to turn off the drain valve and supply the raw water passed through the filter to the ice making device.

### [Advantageous Effects]

In the filter device and the refrigerator according to the disclosure, the switch, which detects whether the filter is installed, is turned on or off interlocking with the rotation of the head cover, so that an operation for detecting whether the filter is completely installed and an operation for detecting a replacement completion signal of the filter can be synchronized with each other.

Therefore, the possibility of malfunction is significantly reduced simplifying the mechanism of detecting the replacement completion signal of the filter because the operation of rotating the head cover to completely install the filter is also used to detect the replacement completion signal of the filter.

Further, in the filter device and the refrigerator according to the disclosure, the switch of detecting whether the filter is installed is turned on or off interlocking with the rotation of the head cover, so that the switch can be turned off when the filter is incorrectly installed, thereby preventing the supply of water from proceeding and preventing water leakage due to the incorrect installation of the filter.

Further, in the filter device and the refrigerator according to the disclosure, the switch of detecting whether the filter is installed is turned on or off interlocking with the rotation of the head cover, so that both the replacement completion signal of the filter and the auto flushing start signal can be detected when the switch is turned on.

Thus, both the replacement completion signal of the filter and the auto flushing start signal are detected by one operation based on the rotation of the head cover, and thus separate operations or structures are not additionally required to individually detect the replacement completion signal of the filter and the auto flushing start signal, thereby improving space utilization in the refrigerator and reducing the number of components.

Further, in the filter device and the refrigerator according to the disclosure, the switch for detecting whether or not the filter is installed becomes turned on or off based on the rotation of the head cover, and employs the push switch that has the elastic repulsion not to be pushed and turned on in the state that the filter is removed, thereby preventing the supply of water from proceeding in the state that the filter is removed.

### [Description of Drawings]

FIG. 1 is a front perspective view of a refrigerator with doors.
FIG. 2 is a front perspective view of a refrigerator without doors.
FIG. 3 is a front view of a refrigerator, partially showing an area where a filter device and an ice making device are placed.
FIG. 4 is a perspective view of a filter device and a storage portion which are mounted to a first guide rail unit.
FIG. 5 is an exploded perspective view of a filter device.
FIG. 6 is an exploded perspective view of a filter bracket to which a filter is mounted.
FIG. 7 is a perspective view showing the interior of a filter device to which a filter is mounted, and an operating direction in which a head cover rotates to mount the filter according to an embodiment of the present specification.
FIGS. 8 to 10 are cross-sectional views showing the operation steps of a head cover that rotates to mount a filter.
FIGS. 11 to 13 are cross-sectional views showing a locking mechanism according to the operation steps of a head cover that rotates to mount a filter.
FIG. 14 is a perspective view showing the interior of a filter device to which a filter is mounted according to an alternative embodiment of the present specification.
FIGS. 15 to 18 are cross-sectional views showing the interior of a filter device to which a filter is mounted, and an operating direction in which a head cover rotates to mount the filter according to an alternative embodiment of the present specification.
FIG. 19 illustrates an embodiment in which a filter device is mounted to a door.
FIG. 20 illustrates an embodiment in which a filter device is mounted to an upper surface of a storage compartment.
FIG. 21 illustrates an embodiment in which a filter device is mounted to a lateral side of a storage compartment

### [Detailed Description]

The foregoing objects, features and merits will be described below in detail with reference to the accompanying drawings, and thus a person having ordinary knowledge in the art to which the disclosure pertains can easily implement the technical ideas of the disclosure. In terms of describing the disclosure, detailed descriptions of related known art will be omitted when they make the subject matters of the disclosure rather unclear. Below, exemplary embodiments of the disclosure will be described in detail with reference to the accompanying drawings. In the accompanying drawings, the same reference numerals refer to the same or similar components.

Further, when it is described that one component is "connected," "coupled," or "joined" to another component, it should be understood that they may be directly connected or joined to each other, but an additional component may be "interposed" therebetween or they may be "connected," "coupled," or "joined" to each other through an additional component.

In the disclosure, it should not be interpreted that terms such as "comprise" or "include" necessarily involve all of various components or steps described in this specification, and it should be interpreted that some component or steps among them may not be involved or additional components or steps may further be involved.

Below, a filter device and a refrigerator according to some embodiments of the disclosure will be described below.

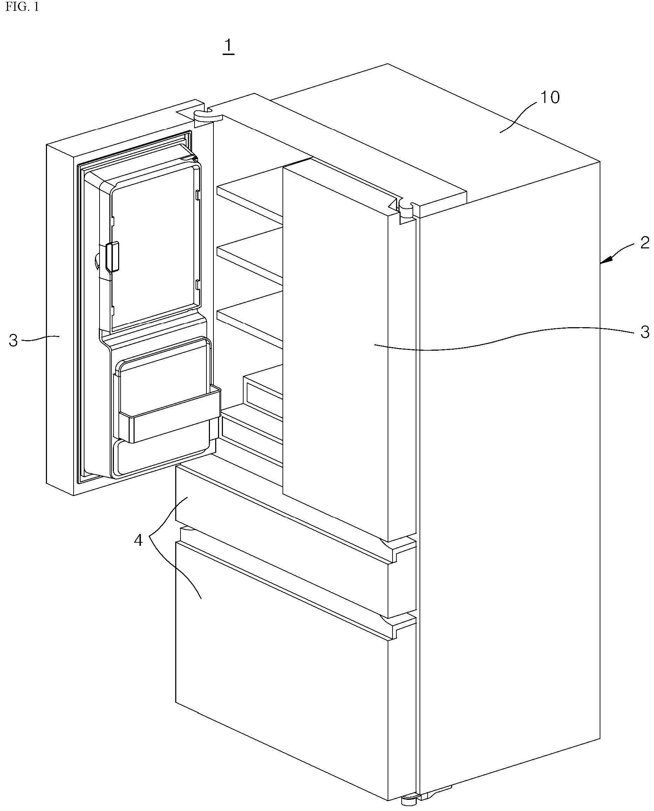

First, the filter device, the refrigerator, and connection relationships between major components thereof according to an embodiment of the disclosure will be described with reference to FIGS. 1 to 13.

Referring to FIG. 1, a refrigerator 1 may have an outer appearance formed by a cabinet 2 including one or more storage compartments, and a plurality of doors 3 and 4 to open and close the opening front of the cabinet 2.

The cabinet 2 may include an outer casing 10 that forms an outer surface of the refrigerator 1, and an inner casing 20 that forms an inner surface of the refrigerator 1.

The outer casing 10 and the inner casing 20 may be formed to have a space to be spaced apart from each other, and the space may be filled with an insulation material foaming therein.

The inside of the inner casing 20 may be partitioned into one or more storage spaces.

The inner casing 20 may include one or more storage compartments, for example, a first storage compartment 30, and a second storage compartment 40.

For instance, the first storage compartment 30 may be a refrigerator compartment, and the second storage compartment 40 may be a freezer compartment.

The first storage compartment 30 and the second storage compartment 40 may be arranged vertically, but are not limited thereto. Alternatively, the first storage compartment 30 and the second storage compartment 40 may be arranged side by side in a horizontal direction.

The second storage compartment 40 may include an ice making device 70 that makes ice, and an ice bin 71 that stores the made ice.

To make ice, water should be supplied to the ice making device 70. For example, there may be two methods of supplying water to the ice making device 70.

For instance, there are a plumbing method of supplying water from a water source such as a tap, and a non-plumbing method of supplying water from a water tank placed inside the refrigerator 1.

Water supplied to the ice making device 70 as above passes through a filter device 60, thereby filtering out impurities contained in water.

The filter device 60 may be placed in the first storage compartment 30.

The filter device 60 may be placed adjacent to one or more storage portions 50.

For example, the filter device 60 may be disposed in parallel with one or more first storage portions 51, and a second storage portion 52 may be disposed above the filter device 60.

The first storage portion 51 and the second storage portion 52 are opened and closed as moved sliding forward and backward, thereby improving space utilization in a narrow space.

The height at which the filter device 60 and the second storage portion 52 are stacked may be designed to have substantially the same height as the first storage portion 51.

Accordingly, the space utilization in the narrow space is further improved, and the heights of shelves that may be placed on the first storage portion 51 and the second storage portion 52 are evenly maintained.

However, the locations of the filter device 60 are not limited to the foregoing place, but may be variously changed.

For instance, referring to FIG. 1, the filter device 60 may be mounted to the door 3.

For example, the filter device 60 may be placed to be accommodated in a predetermined accommodating space provided inside a lower area of the door 3.

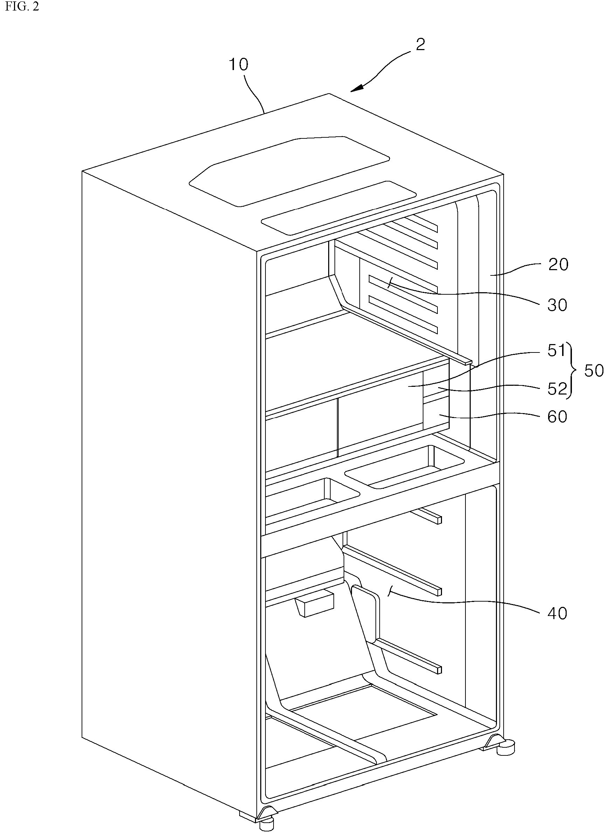

As another example, referring to FIG. 2, the filter device 60 may also be located on an inner upper surface of the first storage compartment 30.

The following descriptions about the filter device 60 may be equally applied regardless of whether the filter device 60 is changed in location.

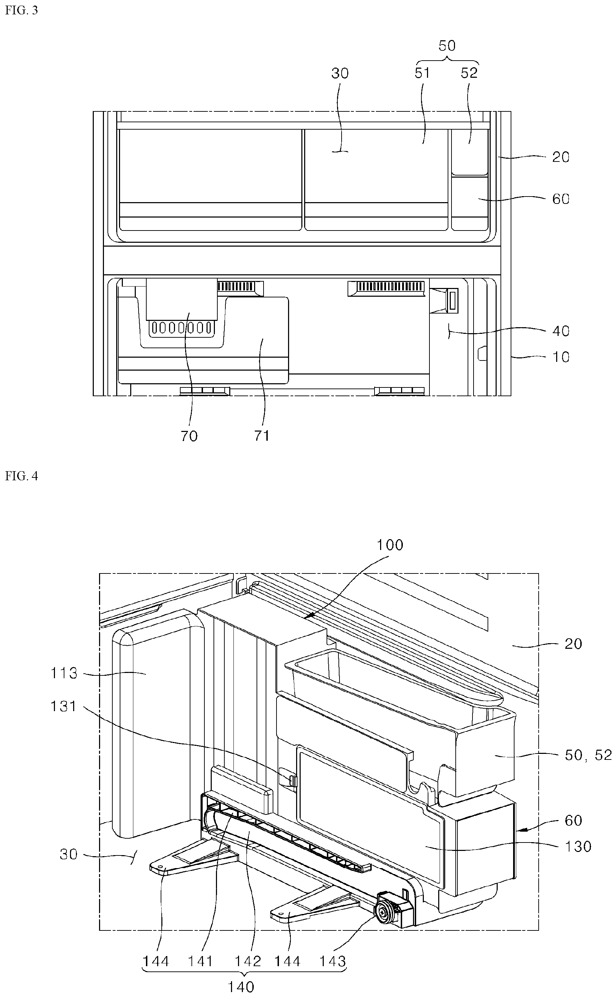

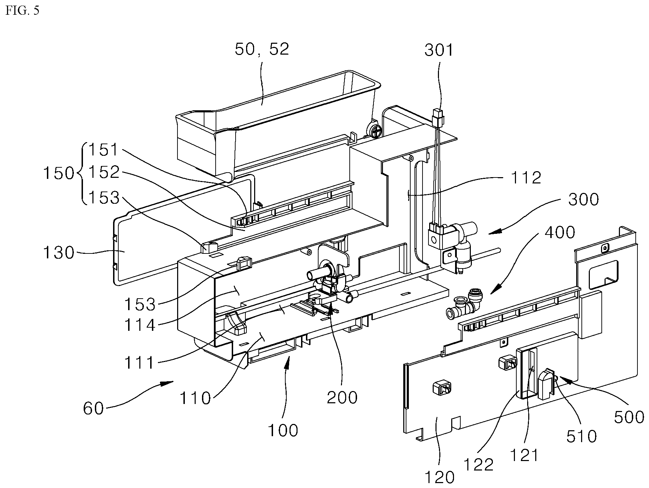

Referring to FIGS. 4 and 5, a casing unit 100 forming the outer appearance of the filter device 60 may be formed being in contact with a first lateral side of the inner casing 20.

In the casing unit 100, a first guide rail unit 140 for guiding the movement of the first storage portion 51 disposed in parallel with the filter device 60 may be formed in a direction where the first storage portion 51 is located.

The first guide rail unit 140 may include a first rail 141 to support a first end of the first storage portion 51, and the first rail 141 may be formed long in forward and backward directions so that the first storage portion 51 can move sliding forward and backward.

The first guide rail unit 140 may include a pair of bottom fastening portions 144 respectively extending outward from the front and rear ends of the casing unit 100 along the bottom of the first storage compartment 30 so that the casing unit 100 can be fastened to the inner casing 20.

In front of the first rail 141, a roller 143 is provided so that the first end of the first storage portion 51 can easily move sliding forward and backward.

Below the first rail 141, a first guide groove 142 recessed inward is formed to provide a passage through which the wheel of the first storage portion 51 moves.

In addition, a finishing wall 113 is formed along the rear end surface of the casing unit 100, thereby enhancing securing and close-contact with the inner casing 20, and serving as an aesthetic finishing material.

The casing unit 100 may have a filter accommodating portion 110, i.e., an accommodating space to accommodate a filter 600 therein.

For example, the filter accommodating portion 110 may include a front accommodating space 111 in which the filter 600 is accommodated, and a rear accommodating space 112 disposed behind the front accommodating space 111. Here, the front accommodating space 111 may be formed to have a lower height than the rear accommodating space 112.

The front accommodating space 111 may accommodate a filter bracket 200 which holds the filter 600, and the rear accommodating space 112 may accommodate a drain valve 300 and a branch pipe 400 which are connected to the filter bracket 200.

Above the front accommodating space 111, the second storage portion 52 may be placed.

Above the front accommodating space 111, a second guide rail unit 150 may be formed including a second rail 151 and a second guide groove 152 which assist the second storage portion 52 to slide forward and backward.

Further, a pair of lateral holding portions 153 are formed in front of the second guide rail unit 150 so as to be in contact with both sides of the second storage portion 52, thereby restricting the forward and backward movements of the second storage portion 52.

According to an embodiment of the present specification, the filter 600 to be accommodated in the casing unit 100 may be provided as a single unit.

Accordingly, the height of the front accommodating space 111 of the casing unit 100 is relatively lowered, so that the second storage portion 52 for additional storage can be formed above the front accommodating space 111, thereby increasing the storage space of the refrigerator 1.

The first lateral side of the casing unit 100 corresponding to the front accommodating space 111 may be opened to form a filter insertion portion 114 so that the filter 600 can be inserted from the lateral direction of the casing unit 100.

On the first lateral side of the casing unit 100 opened as above, a detachable cover 130 may be placed for finishing the first lateral side of the casing unit 100.

When a user wants to replace the filter 600, s/he may first remove the detachable cover 130 and then insert the filter 600 from the lateral side of the casing unit 100.

A press-button type detachable portion 131 may be formed on a first side of the detachable cover 130 so as to be easily attached to and detached from the casing unit 100.

Even on a second lateral side of the casing unit 100, which is opposite to the first lateral side for placing the detachable cover 130 thereon, the casing unit 100 is opened in areas corresponding to the front accommodating space 111 and the rear accommodating space 112, thereby improving workability for various components within the casing unit 100.

On the second lateral side of the casing unit 100 opened as above, a finishing cover 120 may be placed for finishing the second lateral side of the casing unit 100.

On the outer side of the finishing cover 120 may be formed an insertion securing portion 122 into which a switch 500 for detecting whether the filter 600 is installed is inserted and secured.

The insertion securing portion 122 may be formed with a button hole 121 opened so that a switch button 510 of the switch 500 protrudes toward the inside of the casing unit 100.

The button hole 121 may be formed as opened in the forward and backward directions of the finishing cover 120 so that the switch button 510 of the switch 500 can protrude backward with respect to the inside of the casing unit 100.

Therefore, the switch 500 is secured to the insertion securing portion 122 and placed outside the casing unit 100, and the switch button 510 is placed protruding toward the inside of the casing unit 100 through the button hole 121 formed in the insertion securing portion 122.

According to an embodiment of the present specification, the switch 500 may refer to a push switch that is turned on when the switch button 510 is pushed, and turned off when the switch button 510 is not pushed.

The push switch includes a spring or the like elastic body therein, so that the switch button 510 can have elastic repulsion.

Therefore, when force stronger than the elastic repulsion is not continuously exerted on the switch button 510, the switch button 510 is not pushed, thereby remaining turned off.

On the other hand, when force stronger than the elastic repulsion is continuously exerted on the switch button 510, the switch button 510 is pushed, thereby being turned on.

Whether the filter 600 is installed is detected based on whether the switch 500 is turned on or off.

However, the switch 500 is not limited to the foregoing type, and may employ various types of switches based on distance detection or magnetic force detection, such as a reed switch operated using a magnet, a micro-switch operated at a predetermined angle or force.

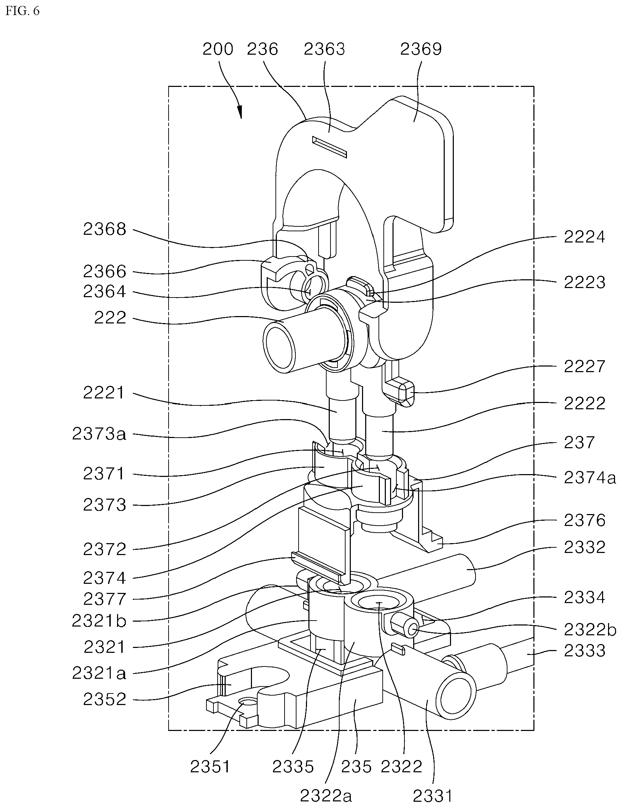

Referring to FIGS. 6 to 13, the filter bracket 200 for holding the filter 600 is as follows.

The filter device 60 may include a filter main body 621, a filter head 222 provided at an upper end of the filter main body 621, and the filter bracket 200 coupled to the filter head 222 and connected to a water supply channel into which raw water is introduced.

The filter 600 meant in the present specification may be broadly defined as including the filter head 222, a filter cap 623, and the filter main body 621, but may also be narrowly defined as indicating the filter main body 621.

The filter head 222 is coupled to the first side of the filter main body 621, the filter head 222 may include an inlet pipe 2221 extending in a certain direction and allowing water to flow in, and an outlet pipe 2222 extending in parallel with the inlet pipe 2221 and allowing water to flow out.

The filter bracket 200 may be installed in the filter 600 to hold the filter 600.

The filter bracket 200 may include a first groove portion 2321 and the second groove portion 2322 extending vertically so that the inlet pipe 2221 and the outlet pipe 2222 can be vertically inserted therein, respectively, thereby allowing the filter head 222 to be attached to or detached from the filter bracket 200 in a vertical direction.

The filter bracket 200 may include a main channel 2331 extending in left and right directions and including a first side into which the raw water is introduced, and a second side from which purified water is discharged.

Water introduced into the first side of the main channel 2331 flows in the filter main body 621 through the first groove portion 2321 and the inlet pipe 2221, and purified water discharged from the filter main body 621 flows out of the second side of the main channel 2331 through the outlet pipe 2222 and the second groove portion 2322.

The filter bracket 200 may include an inflow channel 2332 connected to the first side of the main channel 2331 and allowing the raw water to flow in, and an outflow channel 2333 connected to the second side of the main channel 2331 and allowing the purified water to flow out.

The filter bracket 200 includes an extending wall 235 extending in forward and backward directions to be fastened to a lower portion of the casing unit 100, and the extending wall 235 may be formed with a fastening groove 2352 recessed at a position to which a fastening means will be fastened. The fastening groove 2352 may be formed with a fastening hole 2351.

The filter bracket 200 may include a head cover 236 rotatably coupled to the filter bracket 200 and selectively holding the filter head 222 while rotating with respect to an extending direction of the filter bracket 200.

The head cover 236 may be formed to have an open central area, and at least partially shaped like an arc.

The head cover 236 includes opposite end portions rotatably connected to both sides of the filter bracket 200, rotates backward to release the lock of the filter head 222, and rotates forward to lock the filter head 222.

In other words, the head cover 236 operates to rotate with respect to one axis, thereby restricting the movement of the filter 600.

The filter head 222 may include a lateral portion 2223 formed to protrude forward so that its movement can be limited by the head cover 236 while being in contact with at least a portion of the head cover 236 in the state that the head cover 236 is rotated forward.

In an upper end portion of the head cover 236, a grip portion 2363 may be formed to extend outward so as to make the head cover 236 be gripped easily.

Thus, a user can grip the grip portion 2363 protruding outward and extending along an upper circumference of the head cover 236, and rotate the head cover 236.

The grip portion 2363 may include a button pressing portion 2369 formed on the first side thereof and extending to press the switch button 510 when the head cover 236 rotates.

The switch button 510 may be located within the rotating radius of the head cover 236 so that the head cover 236 can push the switch button 510.

Between the head cover 236 and the filter 600 may be located the switch 500 to be turned on or off based on the rotation of the head cover 236.

For example, when the head cover 236 pushes the switch button 510, the switch 500 is turned on. When the head cover 236 does not push the switch button 510, the switch 500 is turned off.

The button pressing portion 2369 is formed to have a relatively large area, and thus the grip portion 2363 formed in the upper end of the head cover 236 is formed to have an asymmetric shape.

Shaft portions 2321b and 2322b extending outward are respectively formed on the first side of a first protruding portion 2321a defining the first groove portion 2321 and the second side of a second protruding portion 2322a defining the second groove portion 2322, so that the opposite end portions of the head cover 236 can be rotatably coupled to the shaft portions 2321b and 2322b.

On the opposite end portions of the head cover 236, shaft grooves 2364 may be respectively formed as recessed on the surfaces thereof facing each other, so that the shaft portions 2321b and 2322b can be fitted to the shaft grooves 2364.

In the opposite end portions of the head cover 236, a holding protrusion 2362 may be formed to limit the rotation of the head cover 236 while being in contact with the filter bracket 200 in the state that the head cover 236 is rotated in one direction.

Further, the opposite end portions of the head cover 236 may include an extending portion 2366 formed on the surface thereof facing each other, protruding inward, and extending downward.

The extending portion 2366 may be formed to push at least a portion of the filter head 222 when the head cover 236 is rotated backward.

When the extending portion 2366 is formed as above, the filter head 222 may be pushed upward by just rotating the head cover 236 backward so as to separate the filter head 222 from the filter bracket 200.

Further, the head cover 236 may include a pressing portion 2367 formed on the inside of the front and shaped like an inclined or curved surface.

The pressing portion 2367 may be formed to push at least a portion of the filter head 222 downward when the head cover 236 is rotated forward.

When the pressing portion 2367 is formed as above, the filter head 222 may be pushed downward by just rotating the head cover 236 forward so as to couple the filter head 222 to the filter bracket 200.

In an upper portion of the extending portion 2366, a holding rib 2368 may be formed protruding outward and at least partially having a flat surface.

As the holding rib 2368 is formed, the holding rib 2368 is caught in the filter head 222 when the filter head 222 is coupled to the filter bracket 200 while rotating the head cover 236 forward.

Then, a user recognizes that the holding rib 2368 is caught in the filter head 222, and rotates the head cover 236 forward with stronger force to thereby securely couple the filter head 222 to the filter bracket 200.

On the upper side of the filter head 222 may be formed a holding projection 2224 protruding upward. On the inner side of the head cover 236 may be formed a holding groove 2361 to which the holding projection 2224 is fitted in the state that the head cover 236 is rotated forward.

Further, in the upper end of the holding groove 2361 may be formed the holding protrusion 2362 protruding outward from the inner side of the head cover 236.

In this case, the holding projection 2224 is fitted to the holding groove 2361, and thus the head cover 236 is more firmly secured to the filter head 222. Further, the lower end of the holding protrusion 2362 is held in the upper end of the holding projection 2224, thereby restricting the rotation of the head cover 236.

Further, in the opposite end portions of the filter head 222 may be formed a pressing projection 2227 protruding outward.

Between the filter main body 621 and the filter head 222 may be disposed the filter cap 623 coupled to the filter head 222.

The filter cap 623 may be formed with a cap projection 6231, and the filter head 222 may be formed with an opening 2225 opened to check the cap projection 6231 from the outside.

A filter socket 237 may be placed between the filter bracket 200 and the filter head 222.

The filter socket 237 may be formed with a third groove portion 2371 and the fourth groove portion 2372 positioned corresponding the first groove portion 2321 and the second groove portion 2322 of the filter bracket 200, respectively.

In addition, the filter socket 237 may include a first extending pipe 2373 and a second extending pipe 2374 formed protruding upward to defined the third groove portion 2371 and the fourth groove portion 2372, respectively.

The first extending pipe 2373 and the second extending pipe 2374 may include a first open portion 2373a and a second open portion 2374a formed on the outer surfaces thereof and opened outward, respectively.

The first open portion 2373a and the second open portion 2374a are opened in a horizontal direction, and allow the pressing projections 2227 protruding outward from the opposite end portions of the filter head 222 to be fitted thereto.

As described above, the pressing projections 2227 are fitted to the first open portion 2373a and the second open portion 2374a, thereby improving the fastening force between the filter head 222 and the filter bracket 200.

On both forward and backward sides of the filter socket 237 may be formed an upper fastening portion 2376 and a lower fastening portion 2377 which are extending downward.

The filter bracket 200 may include an upper fastening hole 2334 formed in the back of the main channel 2331, to which the upper fastening portion 2376 of the filter socket 237 is fitted, and a lower fastening hole 2335 formed in the front of the main channel 2331, to which the lower fastening portion 2377 of the filter socket 237 is fitted.

The main channel 2331 of the filter bracket 200 may include a locking protrusion 2336 provided on an external upper end thereof, and the head cover 236 may include a first protruding protrusion 2365a, a second protruding protrusion 2365b, and a third protruding protrusion 2365c formed to be locked by the locking protrusion 2336.

The first protruding protrusion 2365a, the second protruding protrusion 2365b, and the third protruding protrusion 2365c may be formed to protrude outward in the lower area of the shaft groove 2364 of the head cover 236.

The first protruding protrusion 2365a may be formed to protrude further outward than the second protruding protrusion 2365b and the third protruding protrusion 2365c.

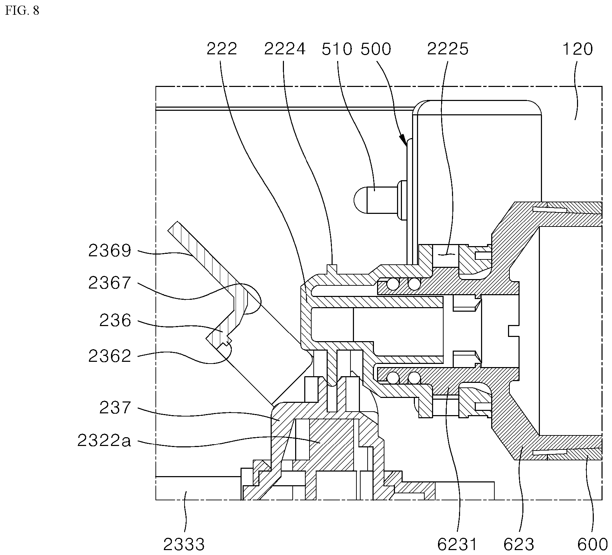

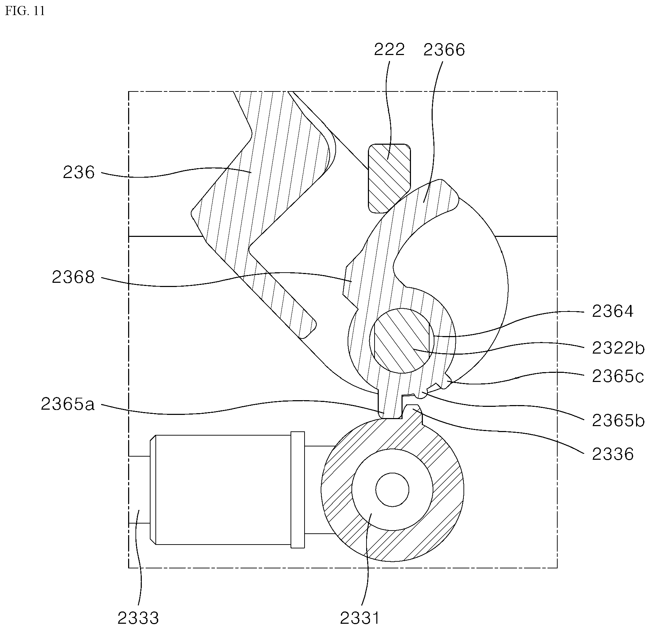

Referring to FIGS. 8 and 11, the head cover 236 is rotated backward at a certain angle so that the filter 600 can be separated from the filter bracket 200. In this state, the locking protrusion 2336 may be locked by the first protruding protrusion 2365a.

In this state, the switch button 510 is not pressed and the switch 500 remains turned off because the filter 600 is not completely installed and the head cover 236 is spaced apart at a predetermined distance from the switch 500.

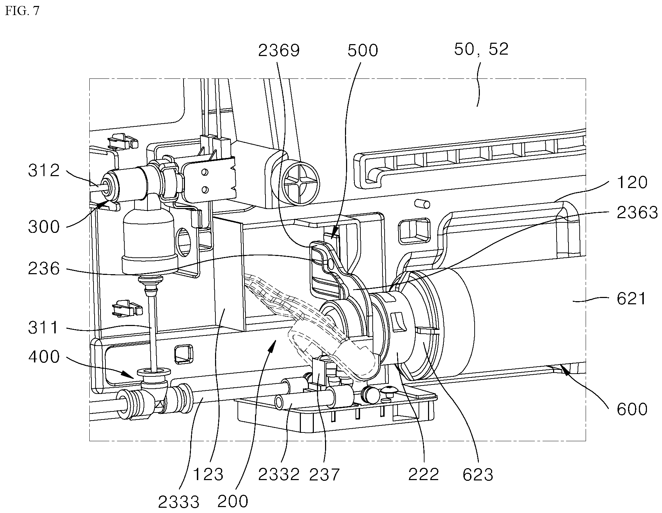

As shown in FIG. 7, a restrictive protrusion 123 may be formed on the first side of the finishing cover 120 behind the head cover 236 to limit the rotation angle so that the head cover 236 cannot rotate beyond a certain angle.

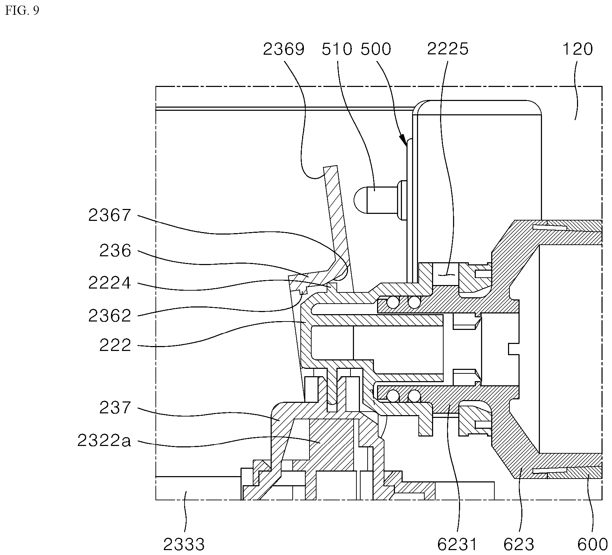

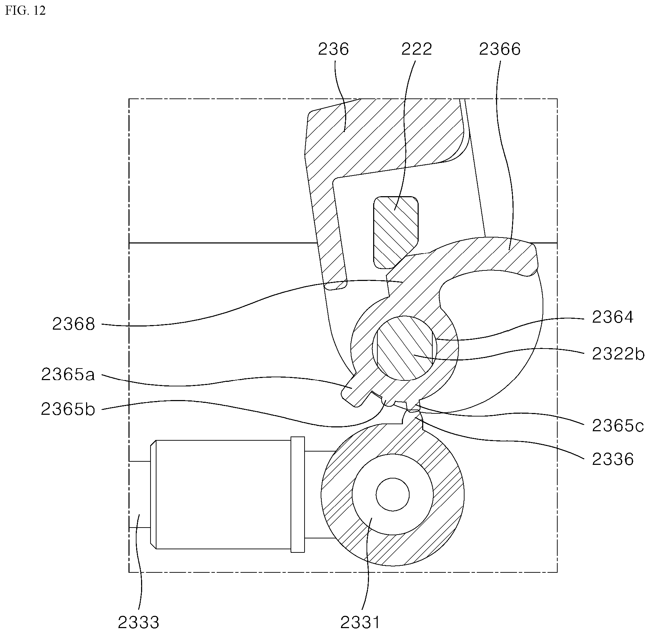

Referring to FIGS. 9 and 12, when the head cover 236 is rotated forward at a certain angle to couple the filter 600 to the filter bracket 200, the head cover 236 presses the filter head 222 in a downward direction where the filter bracket 200 is placed. In this state, the locking protrusion 2336 may come into contact with the second protruding protrusion 2365b or the third protruding protrusion 2365c.

In this case, where the locking protrusion 2336 is placed in the second protruding protrusion 2365b or the third protruding protrusion 2365c may vary depending on the rotation angle of the head cover 236.

In this state, the switch 500 remains turned off because the filter 600 is not completely installed and the head cover 236 does not continuously press the switch button 510 due to the repulsion of the switch 500 that pushes the head cover 236 in an opposite direction to the rotation of the head cover 236.

In this way, according to an embodiment of the present specification, the switch 500 for detecting whether or not the filter 600 is installed becomes turned on or off based on the rotation of the head cover 236. Here, the switch 500 employs the push switch 500 that has the elastic repulsion not to be pushed and turned on in the state that the filter 600 is removed, thereby preventing the supply of water from proceeding in the state that the filter 600 is removed.

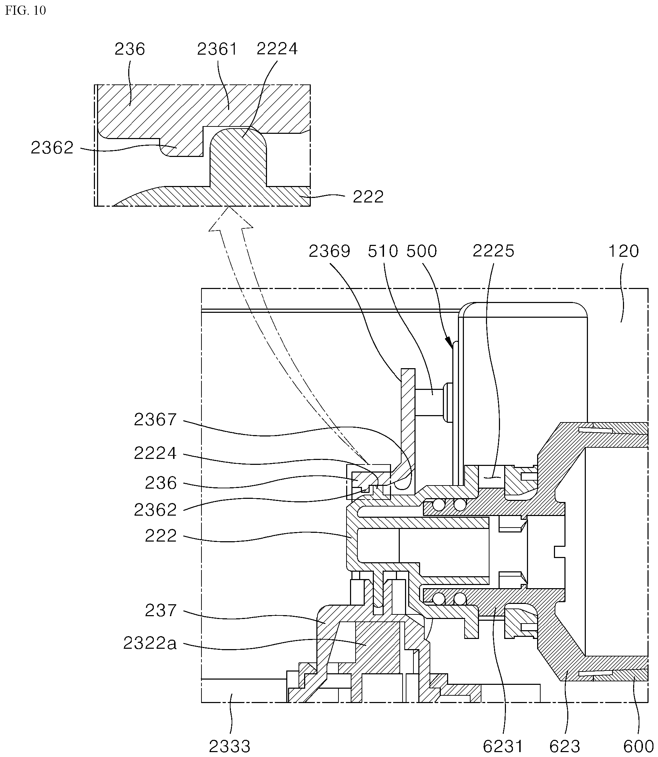

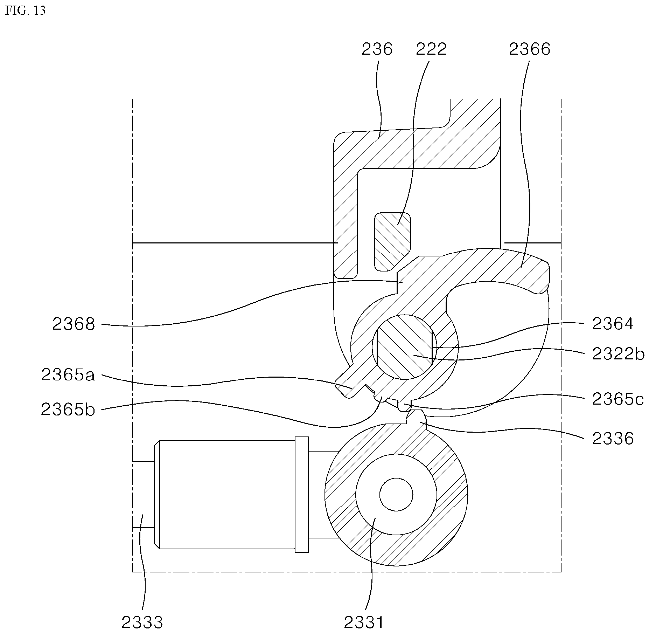

Referring to FIGS. 10 and 13, when the head cover 236 is maximally rotated to completely couple the filter 600 to the filter bracket 200, the head cover 236 fully presses the filter head 222 downward in the direction where the filter bracket 200 is placed. In this state, the locking protrusion 2336 may pass the third protruding protrusion 2365 and be locked by the third protruding protrusion 2365c.

When the filter 600 is completely coupled to the filter bracket 200, the button pressing portion 2369 of the head cover 236 may be maintained pushing the switch button 510 of the switch 500.

In this case, the holding projection 2224 of the filter head 222 is fitted to the holding groove 2361 of the head cover 236, and held and locked by the holding protrusion 2362, thereby allowing a user to easily sense that they are clicked and locked.

With this, the locking protrusion 2336 of the filter bracket 200 is engaged and locked by the third protruding protrusion 2365c, and thus the filter 600 is completely coupled to the filter bracket 200.

In this state, the switch becomes turned on because the filter 600 is completely installed, and the head cover 236 pushes the switch button 510 of the switch 500 in the rotation direction of the head cover 236.

The holding projection 2224 of the filter head 222 is fitted to the holding groove 2361 of the head cover 236, and held and locked by the holding protrusion 2362, so that the head cover 236 can maintain the state of being in direct contact with and pressing the switch button 510.

The switch 500 may be connected to a controller located within the refrigerator 1, transmit a signal to the controller, and be controlled by the controller.

The controller refers to a central control device provided in the refrigerator 1 and responsible for various operations and functions of the refrigerator 1, and may include a microcontroller.

The controller may control various sensors and actuators of the refrigerator 1 to adjust temperature and perform cooling, control, and the like operations.

When the switch 500 is turned on, the controller may detect the on state of the switch 500 as an installation completion signal of the filter 600 and a replacement completion signal of the filter 600.

According to an embodiment of the present specification, the switch 500, which is turned on or off interlocking with the rotation of the head cover 236, is used so that the installation completion signal of the filter 600 and the replacement completion signal of the filter 600 can also be detected synchronizing with a single operation of rotating the head cover 236.

Therefore, according to an embodiment of the present specification, the possibility of malfunction is significantly reduced simplifying the mechanism of detecting the replacement completion signal of the filter 600 compared to other mechanisms of detecting the installation completion signal of the filter 600 and the replacement completion signal of the filter 600.

Further, according to an embodiment of the present specification, the switch 500 of detecting whether the filter 600 is installed is turned on or off interlocking with the rotation of the head cover 236, so that the switch 500 can be turned off when the filter 600 is incorrectly installed, thereby preventing the supply of water from proceeding. Thus, water leakage due to the incorrect installation of the filter is prevented.

Further, according to an embodiment of the present specification, the switch 500 of detecting whether the filter 600 is installed is turned on or off interlocking with the rotation of the head cover 236, so that the controller can detect both the replacement completion signal of the filter 600 and the auto flushing start signal when the switch 500 is turned on.

When the controller detects the auto flushing start signal, the controller may enter the auto flushing mode to supply the raw water to the filter 600 and discharge the raw water passed through the filter 600 to the outside.

To enter the auto flushing mode of the refrigerator 1, the filter device 60 may be configured as follows.

The filter device 60 may include the drain valve 300 for controlling a flow direction of the raw water to move the purified water from the filter 600 to a drain (not shown), and the branch pipe 400 for controlling the flow direction to move the purified water from the filter 600 to the ice making device 70 and/or the drain valve 300.

The branch pipe 400 may refer to a T-type valve that guides three flow directions.

Therefore, a first flow direction of the branch pipe 400 may communicate with the outflow channel 2333 of the filter bracket 200, a second flow direction may communicate with a component compartment valve (not shown) placed in a component compartment (not shown), and a third flow direction may communicate with the drain valve 300.

The drain valve 300 serves to move the raw water to the drain so that the raw water purified by the filter 600 can be discharged to the outside, and includes a first side communicating with the branch pipe 400 and a second side communicating with the drain.

The branch pipe 400 and the drain valve 300 may be connected by a first drain channel 311, and the drain valve 300 and the drain may be connected by a second drain channel 312.

The drain valve 300 may be connected to the controller by a connector 301 and controlled by the controller.

For example, when the drain valve 300 is controlled to be turned on, a channel from the drain valve 300 to the drain is opened, so that the raw water that has passed through the filter 600 and the branch pipe 400 can be discharged to the outside through the drain valve 300.

On the other hand, when the drain valve 300 is controlled to be turned off, the channel from the drain valve 300 to the drain is closed, so that the raw water that has passed through the filter 600 and the branch pipe 400 can flow to the component compartment valve communicating with the branch pipe 400 without passing through the drain valve 300.

The raw water flowing to the component compartment valve may be supplied to places that require the supply of the raw water, such as the ice making device 70 or a dispenser, through the flow control of the component compartment valve.

In the foregoing auto flushing mode, the following operations may be performed.

When the switch 500 is turned on and the installation completion state and the replacement completion state of the filter 600 are detected by the switch 500, the drain valve 300 is turned on to enter the auto flushing mode.

Therefore, the raw water supplied to the filter 600 through the component compartment valve may be discharged to the outside through the branch pipe 400 and the drain valve 300.

Further, after the operations in the auto flushing mode are performed for a certain period of time, the controller may terminate the auto flushing mode and enter an ice maker water supplying mode.

When the ice maker water supplying mode is started, the drain valve 300 is turned off to prevent the raw water from being discharged to the outside through the drain valve 300.

Accordingly, the raw water supplied from the filter 600 can be supplied to the ice making device 70 through the branch pipe 400 via the component compartment valve.

In this way, according to an embodiment of the present specification, both the replacement completion signal of the filter 600 and the auto flushing start signal are detected by one operation based on the rotation of the head cover 236, and thus separate operations or structures are not additionally required to individually detect the replacement completion signal of the filter 600 and the auto flushing start signal, thereby improving space utilization in the refrigerator and reducing the number of components.

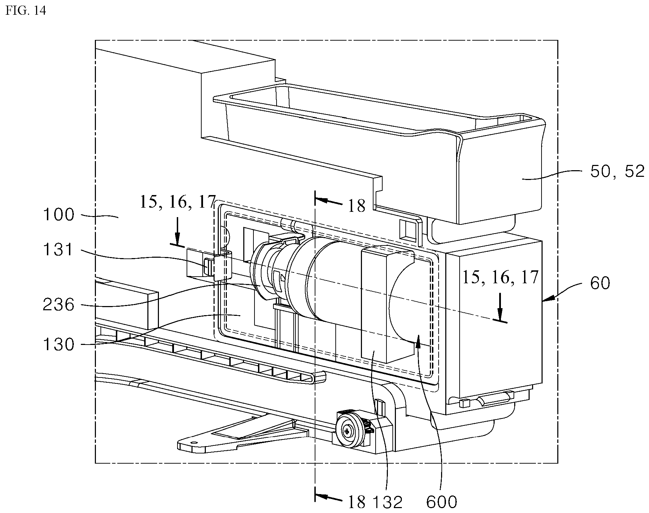

Below, the filter device 60 and the refrigerator 1 according to alternative embodiments of the present specification will be described with reference to FIGS. 14 to 18.

Referring to FIG. 14, the filter 600 may be secured to not the lower portion but the first lateral side of the casing unit 100.

For example, the filter 600 may be inserted in a lateral direction of the casing unit 100 after removing the detachable cover 130 from the filter device 60, and then secured to the finishing cover 120, i.e., the first lateral side of the casing unit 100.

In this case, to assist in securing the filter 600, a supporter 132 configured to surround at least a portion of the filter 600 may be used to firmly secure the filter 600 to the finishing cover 120.

Because the filter 600 is secured to the first lateral side of the casing unit 100 as above, the filter bracket 200 including the head cover 236 for securing the filter 600 may also be secured to the first lateral side of the casing unit 100.

In this case, the upper end of the head cover 236 may be disposed to face toward the detachable cover 130 when the filter 600 is completely secured.

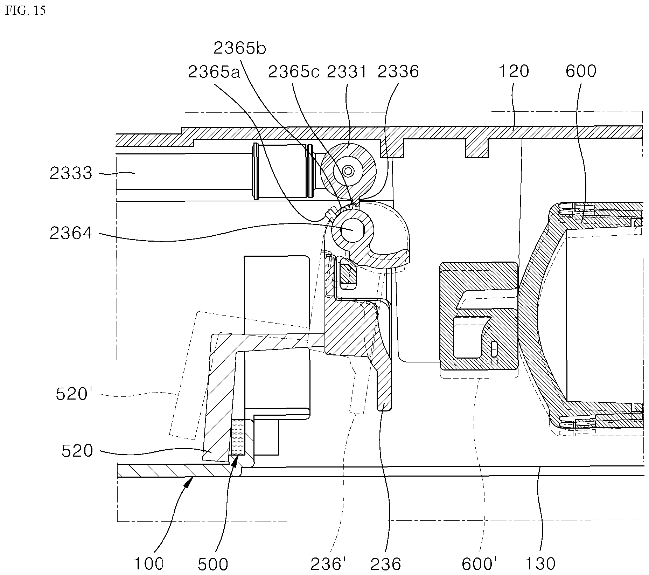

Referring to FIG. 15, the filter bracket 200 and the filter 600 may be secured to the first lateral side of the casing unit 100, and the switch 500 may be placed on the second lateral side of the casing unit 100.

On the first side of the head cover 236 may be connected a structure 520 rotating along with the head cover 236 to push the switch button 510 of the switch 500.

In this case, the switch 500 may be placed between the head cover 236 and the structure 520.

Therefore, when the filter 600 is completely installed to the filter bracket 200, the structure 520 rotates together with the head cover 236 to push the switch 500, thereby turning the switch 500 on.

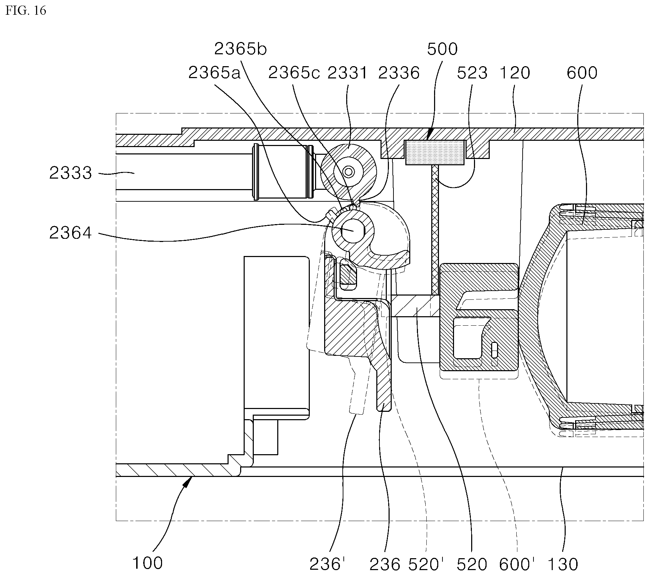

Referring to FIG. 16, the filter bracket 200, the filter 600, and the switch 500 may be secured to and placed on the first lateral side of the casing unit 100.

Between the head cover 236 and the filter 600 may be placed the structure 520 that turns on the switch 500 as pushed by the head cover 236 when the filter 600 is completely installed to the filter bracket 200.

Between the structure 520 and the switch 500 may be placed a connector 523 that pushes the switch 500 when the structure 520 is pushed interlocking with the structure 520.

In other words, when the head cover 236 pushes the structure 520, the connector 523 may operate to push the switch 500 while interlocking with the movement of the structure 520.

The push structure of the switch 500 based on the structure 520 and the connector 523 may employ a level structure, but is not particularly limited thereto.

For instance, the push structure of the switch 500 based on the structure 520 and the connector 523 may refer to a structure using an H-bar door lever and a latch.

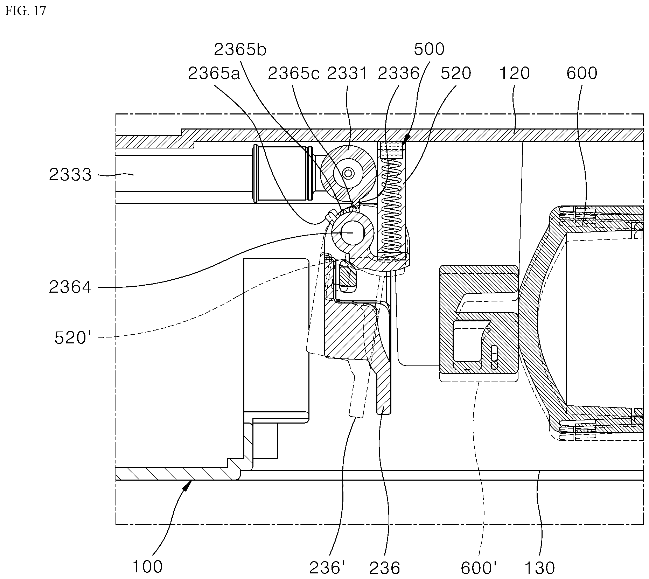

Referring to FIG. 17, the filter bracket 200, the filter 600, and the switch 500 may be secured to and placed on the first lateral side of the casing unit 100.

Between the head cover 236 and the switch 500 may be placed the structure 520 that turns on the switch 500 as pushed by the head cover 236 when the filter 600 is completely installed to the filter bracket 200.

In this case, the structure 520 may include, but not limited to, a spring or the like elastic body.

Further, there are no particular limits to a specific portion of the head cover 236 that pushes the structure 520. For example, the extending portion 2366 of the head cover 236 may push the structure 520.

Therefore, a direction in which the structure 520 is pushed may coincide with a direction in which the filter 600 is completely installed and pushed.

The direction in which the filter 600 is completely installed and pushed may be as follows.

FIGS. 15 to 17 show change in the positions of the structure 520' and the filter 600' indicated by the dotted lines when the switch 500 is turned off, and the positions of the structure 520 and the filter 600 when the switch 500 is turned on.

Thus, when the filter 600 is completely installed to turn the switch 500 on from the off state, the filter 600 is pushed and moved closer to the first lateral side of the casing unit 100.

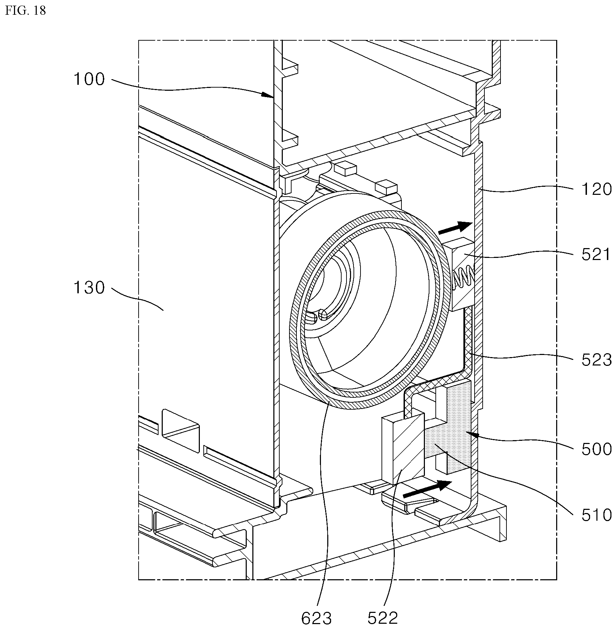

Referring to FIG. 18, the filter bracket 200, the filter 600, and the switch 500 may be secured to and placed on the first lateral side of the casing unit 100.

On the first lateral side of the casing unit 100 may be placed the structure 520 that is pushed by the filter 600 when the filter 600 is completely installed to the filter bracket 200. When the structure 520 is pushed, the switch 500 may also be pushed and turned on.

In this case, the structure 520 may include a first structure 521 placed between the filter 600 and the first lateral side of the casing unit 100, and a second structure 522 pushing the switch 500 when the first structure 521 is pushed.

Further, between the first structure 521 and the second structure 522 may be placed the connector 523 that has a first side and a second side respectively connected to the first structure 521 and the second structure 522 and pushes the second structure 522 when pushed by the first structure 521 while interlocking with the first structure 521.

In other words, the filter 600 and the first structure 521 are disposed to overlap each other in left and right directions, but the filter 600, the second structure 522, and the switch 500 may be disposed not to overlap each other.

In this case, the width of the first structure 521 in the direction of the filter 600 may be thinner than the width of the switch 500 in the direction of the filter 600.

Accordingly, the thin first structure 521 is placed instead of the thick switch 500 between the filter 600 and the finishing cover 120, and the switch 500 may also be pushed by pushing the first structure 521, thereby increasing the space utilization within the filter device 60.

The position of the filter device 60 described as above is not limited to those of the foregoing embodiments, and may be changed variously.

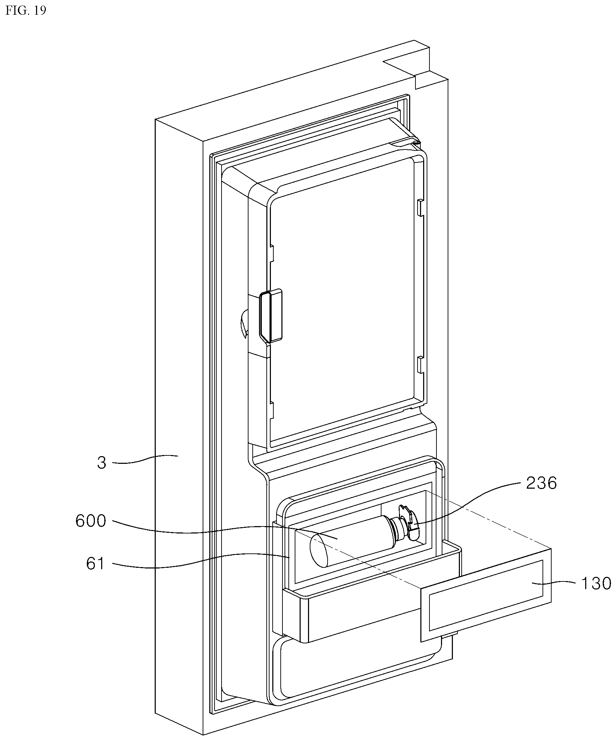

For instance, referring to FIG. 19, a filter device 61 may be mounted to the door 3.

For example, the filter device 61 may be placed to be accommodated in a predetermined accommodating space provided inside a lower area of the door 3.

In the lower area of the door 3, the detachable cover 130 is formed to open and close the filter device 60, and the filter 600 is easily replaceable by removing the detachable cover 130.

A user can detach the filter 600 by rotating the head cover 236 that rotates around a certain axis to restrict the movement of the filter 600.

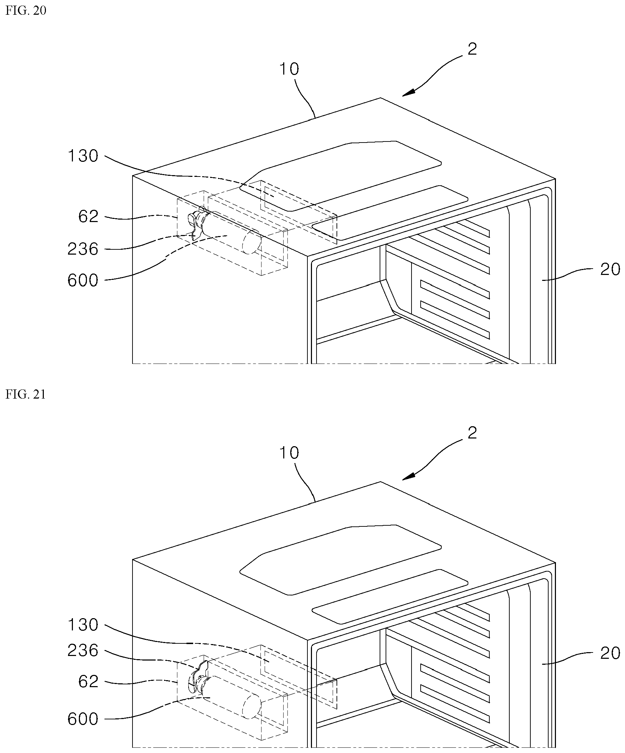

As another example, referring to FIG. 20, a filter device 62 may be located on the inner upper surface of the first storage compartment 30.

For example, the filter device 62 may be located adjacent to the inner upper and lateral surfaces of the first storage compartment 30.

In FIG. 20, the detachable cover 130 for opening and closing the filter device 62 is formed on the lateral side, but is not limited thereto. For a user's convenience taking the height of the refrigerator into account, the detachable cover 130 may be formed on the lower surface of the filter device 62.

For a user's convenience considering the height of the refrigerator, in the case of the filter 600 and the head cover 236 mounted to the filter device 62, the grip portion of the head cover 236 may be located to face toward a lower or lateral direction.

Accordingly, a user can more easily grip the grip portion of the head cover 236 and rotate the head cover 236.

As another example, referring to FIG. 21, the filter device 62 may be located on the inner lateral surface of the first storage compartment 30.

For example, the filter device 62 may be located on the lateral surface of the first storage compartment 30.

The filter device 62 may be located in a lower direction as spaced apart at a predetermined distance from the upper surface of the first storage compartment 30, thereby enhancing a user's convenience taking his/her height into account.

Even in this case, the detachable cover 130 for opening and closing the filter device 62 is illustrated as being formed on the lateral side, but is not limited thereto. Alternatively, the detachable cover 130 may be formed on the lower surface of the filter device 62 for a user's convenience considering the height of the refrigerator.

In addition, in the case of the filter 600 and the head cover 236 mounted to the filter device 62, the grip portion of the head cover 236 may be located to face toward an upper direction, but is not limited thereto. Alternatively, the grip portion may be located to face toward the lower or lateral direction.

Although embodiments of the disclosure have been described with reference to the accompanying drawings, the disclosure is not limited to the embodiments and drawings disclosed in the present specification, and various changes can be made by those skilled in the art without departing from the scope of the disclosure. Further, even though the operational effects of configurations are not explicitly described in the embodiments of the disclosure, the predictable effects of those configurations should also be recognized.

## Claims

1. A filter device comprising:
a casing unit (100) configured to accommodate a filter (600) therein;
a filter bracket (200), to which the filter (600) is installed and secured, comprising a head cover (236) configured to rotate with respect to a certain axis and to restrict movement of the filter (600); and
a switch (500) configured to detect whether the filter (600) is installed, and being turned on or off interlocking with the rotation of the head cover (236).

2. The filter device of claim 1, wherein the switch (500) is located within the rotating radius of the head cover (236).

3. The filter device of claim 1 or 2, wherein the switch (500) comprises a pulse switch having elastic repulsion.

4. The filter device of any one of claims 1 to 3, wherein, upon the filter (600) being completely installed to the filter bracket (200), the switch (500) is configured to be turned on as the head cover (236) pushes the switch (500) in a rotating direction of the head cover (236).

5. The filter device of claim 4, wherein the head cover (236) is in direct contact with the switch (500) while the switch (500) is turned on.

6. The filter device of claim 4 or 5, wherein, upon the switch (500) being turned on, an auto flushing mode is activated to supply water to the filter (600) and discharge the water passed through the filter (600) to an outside.

7. The filter device of any one of claims 1 to 3, wherein, upon the filter (600) being not completely installed to the filter bracket (200), the switch (500) is configured to be turned off as the head cover (236) is spaced apart at a predetermined distance from the switch (500) or the switch (500) is configured to push the head cover (236) in an opposite direction to the rotation of the head cover (236).

8. The filter device of any one of claims 1 to 7, wherein the switch (500) is placed between the head cover and the filter (600).

9. The filter device of claim 1, wherein
the filter bracket (200) and the filter (600) are secured to a one side of the casing unit (100),
the switch (500) is placed on an other side of the casing unit (100), and
a structure (520), which is configured to rotate along with the head cover (236) and to push the switch (500) so as to turn on the switch (500) upon the filter (600) being completely installed to the filter bracket (200), is connected to one side of the head cover (236);
and preferably
wherein the switch (500) is placed between the head cover (236) and the structure (520).

10. The filter device of claim 1, wherein
the filter bracket (200), the filter (600), and the switch (500) are secured to the one side of the casing unit (100), and
a structure (520), which is pushed by the head cover (236) to turn on the switch (500) upon the filter (600) being completely installed to the filter bracket (200), is placed between the head cover (236) and the filter (600);
and preferably
wherein a connector (523), which is configured to interlock with the structure and to push the switch (500) upon the structure (520) being pushed, is placed between the structure (520) and the switch (500).

11. The filter device of claim 1, wherein
the filter bracket (200), the filter (600), and the switch (500) are secured to the one side of the casing unit (100), and
a structure (520), which is configured to be pushed by the head cover (236) to turn on the switch (500) upon the filter (600) being completely installed to the filter bracket (200), is placed between the head cover (236) and the switch (500).

12. The filter device of claim 1, wherein
the filter bracket (200), the filter (600), and the switch (500) are secured to the one side of the casing unit (100),
a structure (520), which is configured to be pushed by the filter (600) upon the filter (600) being completely installed to the filter bracket (200), is placed on the one side of the casing unit (100), and
the switch (500) is configured to be turned on as being pushed upon the structure (520) being pushed;
and preferably
wherein
the structure (520) comprises:
a first structure (521) placed between the filter (600) and the one side of the casing unit (100);
a second structure (522) configured to push the switch (500) upon the first structure (521) being pushed; and
a connector (523) comprising one side and an other side respectively connected to the first structure (521) and the second structure (522) to interlock with the first structure (521) and to push the second structure (522) as the first structure (521) is pushed;
and preferably
wherein the first structure (521) has a narrower width in a direction of the filter (600) than the switch (500).

13. A refrigerator comprising:
a filter device (60) configured to purify water; and
an ice making device (70) configured to receive the purified water from the filter device (60),
the filter device (60) comprising:
a casing unit (100) configured to accommodate a filter (600) therein;
a filter bracket (200), to which the filter (600) is installed and secured, comprising a head cover (236) operating to rotate with respect to a certain axis and restrict movement of the filter (600); and
a switch (500) configured to detect whether the filter (600) is installed, and being turned on or off interlocking with the rotation of the head cover (236).

14. The refrigerator of claim 13, wherein the filter device (60) further comprises:
a drain valve (300) configured to move the purified water from the filter (600) to a drain; and
a branch pipe (400) configured to move the purified water from the filter (600) to the ice making device (70) and/or the drain valve (300), wherein
upon the switch (500) being turned on, the drain valve (300) is turned on,
an auto flushing mode is activated in which water is supplied to the filter (600), and the purified water that has passed through the filter (600) passes through the drain valve (300) and is discharged to the outside;
and preferably
wherein, after the auto flushing mode is activated, the drain valve (300) is turned off, and the ice maker water supplying mode is activated in which the water that has passed through the filter (600) is supplied to the ice making device (70).

15. The refrigerator of claim 13, wherein,
the filter (600) is provided as a single unit,
the casing unit (100) comprises a front accommodating space (111) to accommodate the filter (600) therein, and a rear accommodating space (112) placed behind the front accommodating space (111),
the front accommodating space (111) has a lower height than the rear accommodating space (112), and
the front accommodating space (111) comprises a storage portion (51) disposed in an upper portion thereof.
